# EUROPÄISCHE PATENTSCHRIFT

(11) **EP 0 898 109 B1**
(45) Veröffentlichungstag und Bekanntmachung des Hinweises auf die Patenterteilung: **21.05.2003**
(21) Anmeldenummer: 98115329.9
(22) Anmeldetag: 14.08.1998
(51) Int. Cl.: F16L 37/088

(54) **Steckverbindung für Rohrleitungen**
Plug coupling for pipes
Raccord emboitable pour tuyaux

(30) Priorität: 19.08.1997 DE 19735874; 04.05.1998 DE 19819758
(43) Veröffentlichungstag der Anmeldung: 24.02.1999
(73) Patentinhaber: Johannes Schäfer vormals Stettiner Schraubenwerke GmbH & Co. KG, 35410 Hungen (DE)
(72) Erfinder: Funk, Hans Georg, Ing., 35410 Hungen (DE)
(74) Vertreter: Haar, Lucas H., Dipl.-Ing.

(56) Entgegenhaltungen:
- EP-A- 0 751 331
- EP-A- 0 751 332
- EP-A- 0 762 036
- DE-A- 19 522 052

## Beschreibung

Die Erfindung betrifft eine Steckverbindung der im Oberbegriff des Patentanspruchs 1 angegebenen Art. Steckverbindungen dieser Art werden zum schnellen Verbinden von Rohrund Schlauchleitungen insbesondere von Druckluftanlagen in Kraftfahrzeugen verwendet. Hierbei besteht neben der schnellen Herstellung einer zuverlässigen und druckdichten Verbindung auch das Erfordernis bei unzureichender Verriegelung der Steckverbindung dafür zu sorgen, daß der Steckzapfen unter der Wirkung des Druckmediums nicht unkontrolliert aus der Aufnahmebohrung heraustreten und dadurch Schäden oder Verletzungen hervorrufen kann.

Bei einer aus der EP 07 62 036 A1 bekannten Steckverbindung der angegebenen Art hat das als Einschraubstück ausgebildete Einsatzteil eine Ausnehmung, in der als zweites Halteelement ein geschlitzter Federring angeordnet ist, der in die Ausnehmung im Steckzapfen einrastet, wenn der Steckzapfen beim Stecken oder beim Zurückbewegen aus der Verriegelungsstellung in die Sicherungsstellung gelangt. Damit der Steckzapfen nicht durch den Federring an der Bewegung in die Verriegelungsstellung gehindert wird, ist die in Einsteckrichtung hintere Begrenzungswand der Ausnehmung im Steckzapfen mit einer kegelförmigen Rampe versehen, durch die bei der Bewegung des Steckzapfens in die Verriegelungsstellung der Federring aufgeweitet und radial nach außen in die Ausnehmung im Einsatzteil gedrängt wird. Die bekannte Steckverbindung hat den Nachteil, daß das Einsatzteil nach einem Steckvorgang nicht mehr von dem Steckzapfen getrennt werden kann.

Aus EP-A-0 751 332 ist eine Steckkupplung der eingangs angegebenen Art bekannt, bei der das zweite Halteelement in einer Ausnehmung des Steckzapfens angeordnet und beim Steckvorgang in diese hinein verdrängbar ist. Die Aufnahmebohrung des den Steckzapfen aufnehmenden Einsatzteils weist eine durch einen erweiterten Bohrungsabschnitt gebildete Schulter auf, an der sich das zweite Halteelement nach Erreichen der Sicherungsstellung entgegen der Einsteckrichtung abstützt. Auch bei dieser Steckkupplung können Steckzapfen und Einsatzteil nicht mehr voneinander getrennt werden.

Aus der DE 195 22 052 A1 ist eine Steckkupplung für Druckmittelsysteme bekannt, bei der eine in dem Gehäuseteil angeordnete Verriegelungseinrichtung ein Doppelrastelement mit zwei axial benachbart in einer Innenringnut innerhalb der Gehäuseaufnahmeöffnung gelagerten, radial elastischen Halteringklammern aufweist, die mit einer Rastnut des Steckerschaftes derart zusammenwirken, daß in einer Vorraststellung zunächst nur die in Einsteckrichtung erste Halteringklammer in die Rastnut einrastet und in der Vollraststellung beide Halteringklammern bereichsweise in die Rastnute eingreifen. Durch Herausschrauben eines die Innenringnut hierbei begrenzenden Einsatzsteils kann die Steckkupplung gelöst und nach Entfernen des Doppelrastelements aus der Rastnut der Steckerschaft von dem Einsatzteil getrennt werden. Bei dieser bekannten Steckkupplung ist als nachteilig anzusehen, daß das Doppelrastelement eine größere axiale Baulänge der Aufnahmeöffnung im Gehäuseteil und damit der gesamten Steckkupplung erforderlich macht. Weiterhin erfordert das Doppelrastelement eine besondere Gestaltung der Halteringklammern, da in der Vollraststellung die Haltekraft über beide Halteringklammern übertragen wird.

Der Erfindung liegt die Aufgabe zugrunde, eine Steckverbindung der angegebenen Art derart weiterzubilden, daß das Einsatzteil auf einfache Weise von dem eingesteckten Steckzapfen wieder getrennt werden kann.

Diese Aufgabe wird erfindungsgemäß dadurch gelöst, daß nach dem Lösen des Einsatzteils vom Gehäuseteil der Steckzapfen mit dem zweiten Halteelement in der Bohrung des Einsatzteils in Einsteckrichtung über die Verriegelungsstellung hinaus in eine Stellung verschiebbar ist, in der das zweite Halteelement aus der Bohrung des Einsatzteils heraustritt und aus der Ausnehmung im Steckzapfen entnehmbar ist. Vorteilhafte Weiterbildungen der Erfindung sind in den Unteransprüchen angegeben.

Bei der erfindungsgemäßen Steckverbindung kann das zweite Halteelement, das ebenfalls als geschlitzter Federring ausgebildet sein kann, von dem Steckzapfen in Einsteckrichtung aus der Ausnehmung im Einsatzteil herausgedrückt und in Richtung auf die Ausnehmung am Ende des Einsatzteils verschoben werden. Wird das Einsatzteil aus dem Gehäuseteil herausgeschraubt, so kann der Steckzapfen in Einsteckrichtung über die Verriegelungsstellung hinaus soweit bewegt werden, daß die Ausnehmung im Steckzapfen und damit auch das in dieser befindliche zweite Halteelement vollständig aus der Bohrung des Einsatzteils heraustritt. Das zweite Halteelement liegt dann frei und kann daher von dem Steckzapfen ebenso wie das erste Halteelement entfernt werden. Nachdem beide Halteelemente von dem Steckzapfen entfernt sind, kann der Steckzapfen entgegen der Einsteckrichtung aus dem Einsatzteil herausgezogen werden. Eine Trennung von Steckzapfen und Einsatzteil ist daher sehr einfach durchzuführen. Der Steckzapfen kann dabei mit der angeschlossenen Rohrleitung verbunden bleiben und das Anschlußende des Steckzapfens kann beliebig ausgeführt sein, z.B. als Winkel- oder T-Stück.

Die erfindungsgemäße Ausgestaltung der Steckverbindung hat weiterhin den Vorteil, daß die Ausnehmung in dem Einsatzteil eine verhältnismäßig geringe radiale Tiefe haben kann, da sie das zweite Halteelement nicht vollständig, sondern nur teilweise aufnehmen muß. Die Wandstärke des Einsatzteils kann daher entsprechend kleiner bemessen sein.

Eine vorteilhafte Weiterbildung der Erfindung sieht vor, daß die Ausnehmung im Steckzapfen einen ersten, in Einsteckrichtung vorderen Abschnitt und einen zweiten, in Einsteckrichtung hinteren Abschnitt aufweist, daß der erste Abschnitt eine radiale Tiefe hat, die kleiner ist als die radiale Dicke des zweiten Halteelements und daß der zweite Abschnitt in radialer und axialer Richtung so groß bemessen ist, daß er das zweite Halteelement vollständig aufnehmen kann. Diese Weiterbildung hat den Vorteil, daß das zweite Halteelement in der Sicherungsstellung, in der es in den ersten Abschnitt der Ausnehmung im Steckzapfen eingreift, durch die geringere Tiefe dieses Abschnitts formschlüssig in Eingriff mit der Ausnehmung in der Bohrung des Einsatzteils gehalten wird, so daß es in der Sicherungsstellung gegen selbsttätiges Lösen gesichert ist. Weiterhin reicht in der Sicherungsstellung eine verhältnismäßig geringe radiale Überdeckung zwischen dem zweiten Halteelement und den Anlageflächen der Ausnehmungen aus und die Anlageflächen, die in der Sicherungsstellung den Steckzapfen festhalten, können zur Kraftrichtung geneigt sein.

Ein Ausführungsbeispiel der Erfindung ist in der Zeichnung dargestellt und wird im folgenden näher beschrieben. Es zeigen
- Figur 1: einen Halbschnitt der erfindungsgemäßen Steckverbindung vor dem Stecken,
- Figur 2: einen Halbschnitt der Steckverbindung gemäß Figur 1 in Verriegelter Stellung,
- Figur 3: einen Halbschnitt der Steckverbindung gemäß Figur 1 in der Sicherheitsstellung,
- Figur 4: einen Halbschnitt der Steckverbindung gemäß Figur 1 in der zum Trennen von Steckzapfen und Einsatzteil geeigneten Lösestellung und
- Figur 5: einen Querschnitt durch die Steckverbindung entlang der Linie V-V in Figur 3,
- Figur 6: einen Ausschnitt der Steckverbindung gemäß Figur 1 mit einer zweiten Ausführungsform des zweiten Halteelements,
- Figur 7a: einen Ausschnitt einer weiteren Ausführungsform einer erfindungsgemäßen Steckverbindung zu Beginn des Steckens,
- Figur 7b: einen Ausschnitt der Steckverbindung gemäß Figur 1 in der Sicherungsstellung,
- Figur 7c: einen Ausschnitt der Steckverbindung gemäß Figur 1 der Verriegelungsstellung,
- Figur 7d: einen Ausschnitt der Steckverbindung gemäß Figur 1 zu Beginn des Steckens mit falsch montiertem zweiten Halteelement,
- Figur 8: einen Ausschnitt einer Steckverbindung gemäß Figur 1 mit einer vierten Ausführungsform des zweiten Halteelements in der Sicherungsstellung.

Die in der Zeichnung dargestellte Steckverbindung besteht aus einem Außenteil 1 und einem Innenteil 2. Das Außenteil 1 ist aus zwei Teilen, einem Gehäuseteil 3 und einem Einsatzteil 4 zusammengesetzt. Das Gehäuseteil 3 weist eine zweifach abgestufte Bohrung 5 auf. In die äußere, mit einem Innengewinde versehene Stufe 6 der Bohrung 5 ist das mit einem Außengewinde versehene Einsatzteil 4 eingeschraubt. Außerhalb der Bohrung 5 weist das Einsatzteil 4 einen Außensechskant 7 zum Ansetzen eines Schraubenschlüssels auf. Die axiale Länge des Einsatzteils 4 ist kleiner als diejenige der Stufe 6, wodurch zwischen der durch die in Steckrichtung hintere Stirnfläche 8 des Einsatzteils 4 und die Stufenfläche 9 am inneren Ende der Stufe 6 eine Ausnehmung 10 gebildet ist, in der sich ein im Querschnitt quadratisches, ringförmiges Halteelmeent 11 befindet. Das Halteelement 11 besteht aus Kunststoff und ist mit einem radialen Schlitz versehen. Es kann daher radial elastisch verformt werden. An die Stufe 6 der Bohrung 5 schließt sich eine kleinere Stufe 12 an, die nach innen wiederum durch eine Stufenfläche 13 begrenzt wird. In der Stufe 12 befindet sich ein Federelement 14, das ebenfalls aus Kunststoff hergestellt ist. Das Einsatzteil 4 weist eine Durchgangsbohrung 15 auf, in die eine ringförmige Ausnehmung 16 eingearbeitet ist. Die Ausnehmung 16 wird in Einsteckrichtung durch eine in einem Winkel von 45° geneigte, kegelförmige Rampe 17 begrenzt. Die Begrenzung der Ausnehmung 16 entgegen der Einsteckrichtung erfolgt durch eine senkrecht zur Bohrungsachse verlaufende Ringfläche 18. Die Einstecköffnung der Durchgangsbohrung 15 ist mit einer sich nach außen erweiternden Kegelfläche 19 versehen.

Das Innenteil 2 hat die Form eines Rohres und weist einen in das Außenteil 1 einsteckbaren Steckzapfen 20 und eine Tülle 21 zur Befestigung einer Schlauch- oder Rohrleitung auf. An dem Steckzapfen 20 sind zwei in Ringnuten eingesetzte Dichtringe 22, 23 angebracht. Der Dichtring 22 dient zur Abdichtung der Steckverbindung gegenüber dem durch diese geleiteten Medium, beispielsweise Druckluft. Der Dichtring 23 bildet eine Abdichtung nach außen um das Eindringen von Schmutz und Feuchtigkeit in die Steckverbindung zu unterbinden. Das Einsteckende des Steckzapfens 20 ist mit einer sich zum Ende hin verjüngenden Kegelfläche 24 versehen, die einen Neigungswinkel von etwa 30° hat. In der Nähe der Kegelfläche 24 weist der Steckzapfen 20 eine Ausnehmung 25 in Form einer Ringnut auf, die zur Aufnahme des Halteelements 11 in der Verriegelungsposition bestimmt ist. Die Ausnehmung 25 nimmt außerdem ein zweites Halteelement 26 auf, das aus einem geschlitzten Federdrahtring 27 besteht. Der Federdrahtring hat eine kreisförmige Grundform mit einem Außendurchmesser, der dem Innendurchmesser der Ausnehmung 16 entspricht. Der mittlere Umfangsbereich 28 und die an den Schlitz angrenzenden Umfangsenden 29 des Federdrahtrings 27 sind jedoch von der Kreisform abweichend radial nach innen gebogen, so daß diese Bereiche des Federdrahtrings 27 an der Mantelfläche der Ausnehmung 25 anliegen und dadurch den Federdrahtring 27 gegenüber dem Steckzapfen 20 zentrieren.

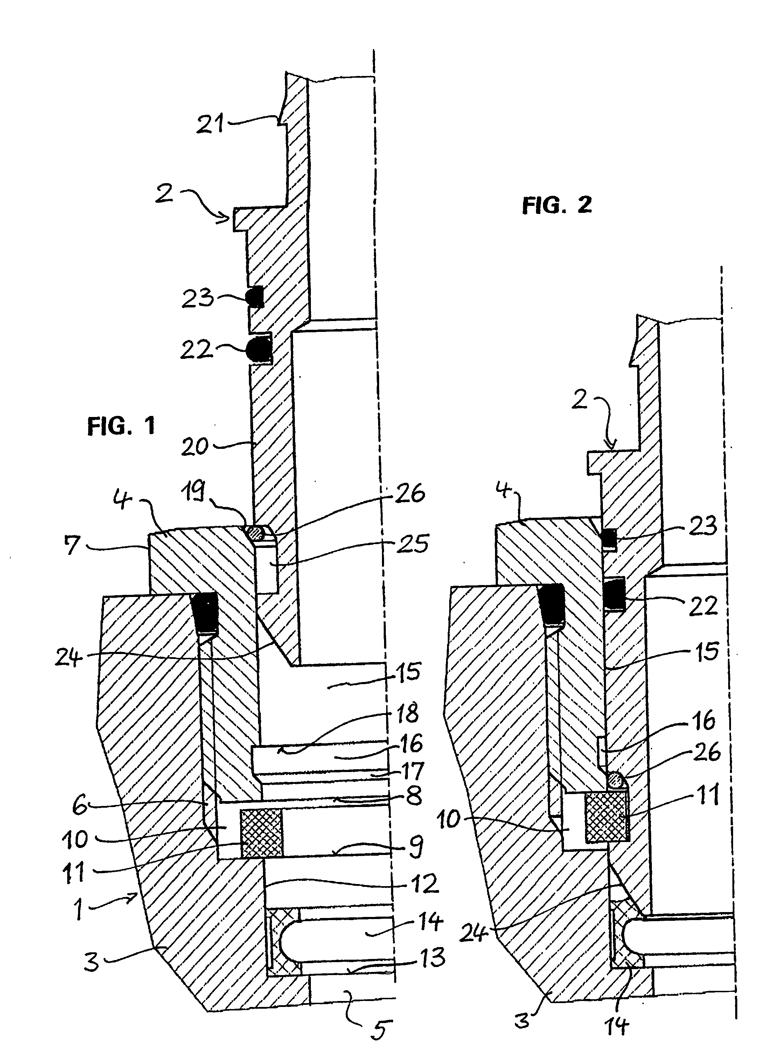

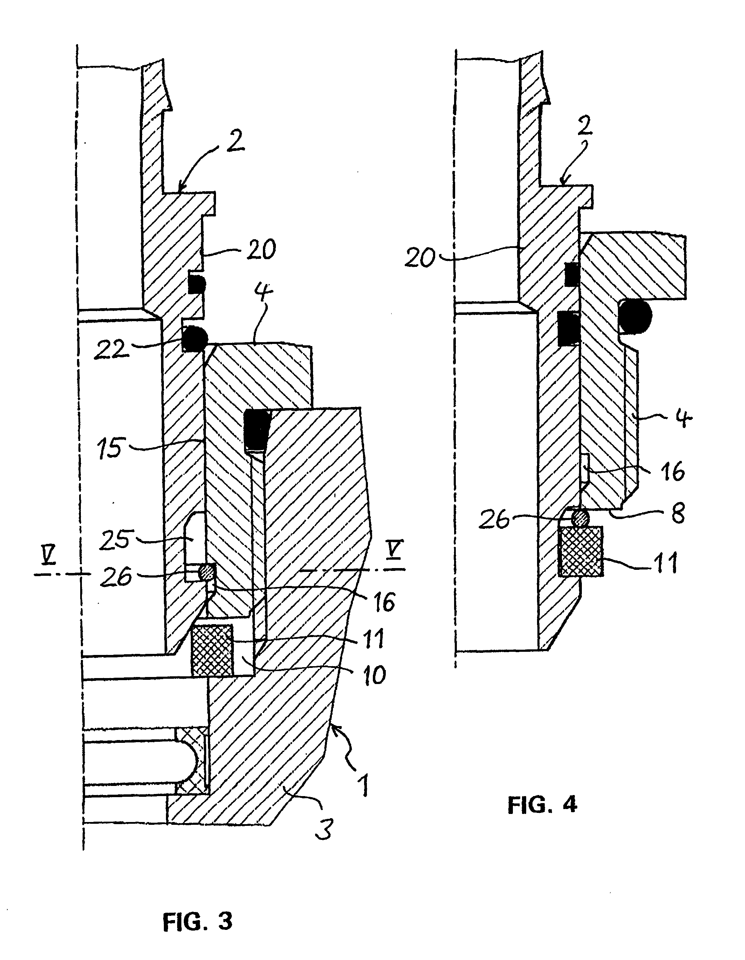

Das Stecken der beschriebenen Steckverbindung beginnt mit dem in Figur 1 gezeigten Einführen des Steckzapfens 20 in die Durchgangsbohrung 15 des Einsatzteils 4. Durch die beim Steckvorgang auf den Steckzapfen 20 einwirkende Kraft in Einsteckrichtung wird das Halteelement 26 in die Durchgangsbohrung 15 gedrückt, wobei es durch die Kegelfläche 19 radial nach innen zusammengedrückt und vollständig von der Ausnehmung 25 aufgenommen wird. Im weiteren Verlauf des Steckvorgangs wird das Halteelement 26 von dem Steckzapfen 20 längs der Durchgangsbohrung 15 bewegt, bis es, wie in Figur 3 gezeigt, in die Ausnehmung 16 einrastet. Sobald diese Stellung erreicht ist, kann der Steckzapfen 20 ohne Herausschrauben des Einsatzteils 4 nicht mehr aus der Durchgangsbohrung 25 herausgezogen werden, da das Halteelement 26 in beide Ausnehmungen 16, 25 eingreift und durch eine Bewegung des Steckzapfens 20 entgegen der Einsteckrichtung aus dieser Eingriffslage nicht entfernt werden kann. In dieser Stellung des Halteelements ist daher der Steckzapfen 20 in dem Außenteil 1 gegen ungewolltes Lösen gesichert. Die axiale Position der Ausnehmungen 16 und 25 ist hierbei so auf die axiale Position des Dichtrings 22 abgestimmt, daß sich in der Sicherungsstellung gemäß Figur 3 der Dichtring 22 außerhalb der Durchgangsbohrung 15 befindet. Die Verbindung zwischen dem Steckzapfen 20 und dem Außenteil 1 ist daher undicht, so daß bei einer Beaufschlagung der Steckverbindung mit Druckluft ein Teil der Druckluft über den Spalt zwischen dem Steckzapfen 20 und dem Einsatzteil 4 hörbar entweicht und dadurch den unvollständigen Steckvorgang anzeigt.

Um in die Verriegelungsstellung zu gelangen, muß der Steckzapfen 20 tiefer in das Außenteil 1 hineingedrückt werden, wobei mit Hilfe der Kegelfläche 24 das Halteelement 11 auseinandergedrückt wird, so daß es über das Ende des Steckzapfens 22 hinweggleitet und in die Ausnehmung 25 im Steckzapfen 20 einrastet. Bei diesem Vorgang wird außerdem das Halteelement 26 durch den Steckzapfen 20 über die Rampe 17 erneut zusammengedrückt und in den Endabschnitt der Durchgangsbohrung 25 geschoben werden. Die so erreichte Verriegelungsstellung ist in Figur 2 gezeigt. Der Steckzapfen 20 stützt sich hierbei unter der Wirkung des an der Kegelfläche 24 anliegenden Federelements 14 über das Halteelement 11 an der Stirnfläche 8 des Einsatzteils 4 ab. Außerdem sind in dieser Verriegelungsstellung die beiden Dichtringe 22, 23 in Eingriff mit der Durchgangsbohrung 15, so daß die Steckverbindung in der erforderlichen Weise abgedichtet ist.

Wird der Steckzapfen 20 nicht so tief in das Außenteil 1 hineingedrückt, daß das Halteelement 11 in die Ausnehmung 25 einrasten kann, so kann bei der Beaufschlagung der Steckverbindung mit Druckluft der Steckzapfen 20 wieder entgegen der Einsteckrichtung zurückgedrückt werden. Hierbei rastet aber das Halteelement 26 wieder in die Ausnehmung 16 ein, wodurch der Steckzapfen 20 in der Sicherungsstellung gemäß Figur 3 festgehalten wird.

Soll die Steckverbindung gelöst werden, so muß hierzu das Einsatzteil 4 aus dem Gehäuseteil 3 herausgeschraubt werden. Ist dies geschehen, so kann beispielsweise zum Erneuern der Dichtringe 22, 23 oder zum Auswechseln des Einsatzteils 4 der Steckzapfen 20 auf einfache Weise von dem Einsatzteil 4 getrennt werden, indem der Steckzapfen 20 in Einsteckrichtung gegenüber dem Einsatzteil 4 soweit verschoben wird, bis das Halteelement 26 aus der Durchgangsbohrung 15 heraustritt. Diese Stellung ist in Figur 4 gezeigt. Anschließend können die Halteelemente 11, 26 von dem Steckzapfen 20 abmontiert und danach der Steckzapfen 20 aus dem Einsatzteil 4 herausgezogen werden. Für die erneute Montage wird vor dem Steckvorgang das Halteelement 26 wieder in die Ausnehmung 25 des Steckzapfens 20 eingesetzt. Da sich das Halteelement 26 auf dem Steckzapfen befindet, ist eine Überprüfung des Vorhandenseins dieses Sicherungselements besonders leicht.

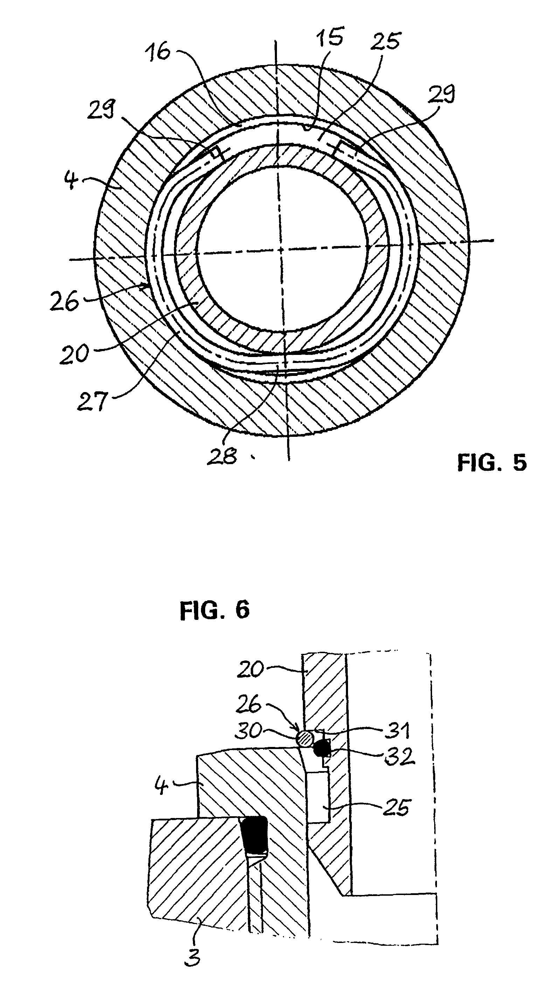

Eine andere vorteilhafte Ausgestaltung des zweiten Halteelements 26 ist in Figur 6 gezeigt. Das Halteelement 26 besteht hier aus einem geschlitzten Federdrahtring 30 von kreisförmiger Form, dessen mittlerer Durchmesser in entspanntem Zustand gleich dem Außendurchmesser des Steckzapfens 20 ist. Um den Federdrahtring 30 in der Ausnehmung 25 zu zentrieren, ist in einer der in Steckrichtung hinteren Wand 31 der Ausnehmung 25 benachbarten Nut ein Elastomerring 32 angeordnet, dessen Außendurchmesser etwas größer ist als der Innendurchmesser des Federdrahtrings 30. Durch den Elastomerring 32 wird der Federdrahtring 30 genau zentrisch zum Steckzapfen 20 in Anlage an der Wand 31 festgehalten. Beim Steckvorgang gibt der Elastomerring 32 entsprechend der Verformung des Federdrahtrings 30 nach, wobei er sich in Richtung des vorderen Teils der Ausnehmung 25 elastisch verformen kann und dementsprechend nur geringe Gegenkräfte dem Federdrahtring 30 entgegensetzt. Der Steckvorgang läßt sich daher mit dieser Ausgestaltung des zweiten Halteelements 26 mit geringer Steckkraft zuverlässig durchführen. Im übrigen entspricht die Funktionsweise dem bereits zuvor beschriebenen Ausführungsbeispiel, wobei die Abmessungen des Federdrahtrings 30 und des Elastomerrings 32 so aufeinander abgestimmt sind, daß der Federdrahtring 30 zum Erreichen der Sicherungsstellung über den Elastomerring 32 hinweggleiten kann.

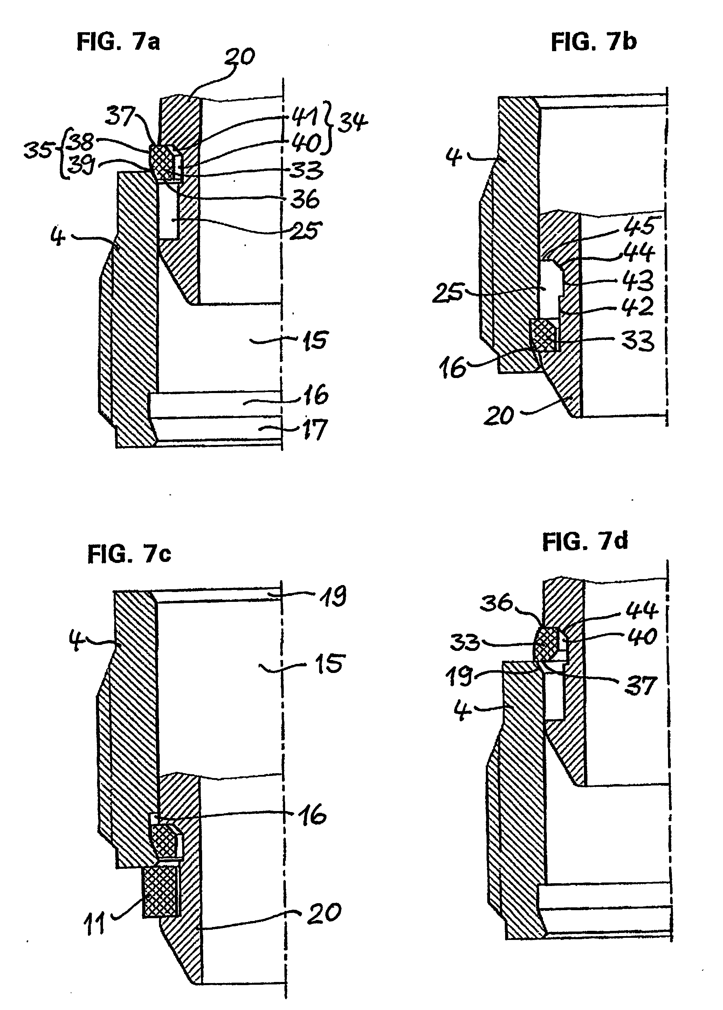

Bei der in den Figuren 7a bis 7d gezeigten Steckverbindung besteht das zweite Halteelement 26 aus einem geschlitzten Ring 33 aus Kunststoff. Der Ring weist eine Bohrungsfläche 34, eine Mantelfläche 35 und parallele, radialen Stirnflächen 36, 37 auf. Die Mantelfläche 35 setzt sich aus einer Zylinderfläche 38 und einer sich zur Stirnfläche 36 hin verjüngenden Kegelfläche 39 mit einer Neigung von 30° zusammen, die das Einstecken erleichtert. Die Bohrungsfläche 34 weist einen zylindrischen Abschnitt 40 und eine an die Stirnfläche 37 angrenzende Fase 41 mit einer Neigung von 45° auf. Der Innendurchmesser des Abschnitts 40 des entspannten Rings 33 entspricht im wesentlichen dem Innendurchmesser des ersten Halteelements 11 und der Außendurchmesser der Zylinderfläche 38 des entspannten Rings 33 entspricht im wesentlichen dem Innendurchmesser der ringförmigen Ausnehmung 16 im Einsatzteil 4. Die Form der Ausnehmung 16 ist an die Form des Rings 33 angeglichen und mit einem zylindrischen Abschnitt und einer kegelförmigen Rampe 17 versehen. Die axiale Breite der Ausnehmung 16 ist jedoch etwas größer als diejenige des Rings 33.

Die innere Mantelfläche der Ausnehmung 25 im Steckzapfen 20 weist bei diesem Ausführungsbeispiel zwei Abschnitte 42, 43 unterschiedlichen Durchmessers auf. Der in Einsteckrichtung hintere Abschnitt 43 ist wie die Bohrungsfläche 34 zylindrisch und analog zur Fase 41 mit einer Kegelfläche 44 versehen, die sich zur seitlichen Anlagefläche 45 der Ausnehmung 25 erweitert. In seinem Durchmesser und seiner Länge ist der Abschnitt 43 so bemessen, daß er beim Steckvorgang den Ring 33 vollständig aufnehmen kann, wenn dieser, wie in Figur 7a gezeigt, richtig montiert ist. Der in Einsteckrichtung vordere Abschnitt 42 der Ausnehmung 25 hat einen Durchmesser, der kleiner als der Innendurchmesser des entspannten Rings 33 jedoch so groß ist, daß der Ring 33 in der in Figur 7b gezeigten Sicherungsstellung nicht aus der Ausnehmung 16 des Einsatzteils 4 heraustreten kann und der Steckzapfen gegen unbeabsichtigtes Lösen formschlüssig gesichert ist. Die Steckverbindung hat zudem den Vorteil, daß auf zusätzliche Mittel zur Zentrierung des Rings 33 beim Steckvorgang verzichtet werden kann, da die Kegelfläche 39 des Rings 33 im Zusammenwirken mit der Kegelfläche 19 des Einsatzteils 4 die erforderliche Zentrierung beim Steckvorgang bewirkt.

Wird bei der beschriebenen Ausführungsform der Steckverbindung versehentlich der Ring 33, wie in Figur 7d gezeigt, falsch montiert, so verhindert der Ring 33, daß der Steckzapfen 20 in die Bohrung 15 des Einsatzteils 4 gesteckt werden kann. Dies wird dadurch erreicht, daß sich der falsch montierte Ring 33 beim Stecken mit der durch die Bohrungsfläche 34 und die Stirnfläche 36 gebildeten Kante an der Kegelfläche 44 der Ausnehmung 25 abstützt und dadurch daran gehindert ist, durch die auf ihn einwirkenden Kräfte radial zusammengedrückt zu werden. Zusätzlich kann die Eintrittsöffnung der Kegelfläche 19 kleiner bemessen sein als der Außendurchmesser der Zylinderfläche 38, so daß der Ring 33 nicht von der Kegelfläche 19 erfaßt und zusammengedrückt werden kann. Auf diese Weise wird eine Fehlmontage des Rings 33 von dem Anwender zwangsläufig festgestellt.

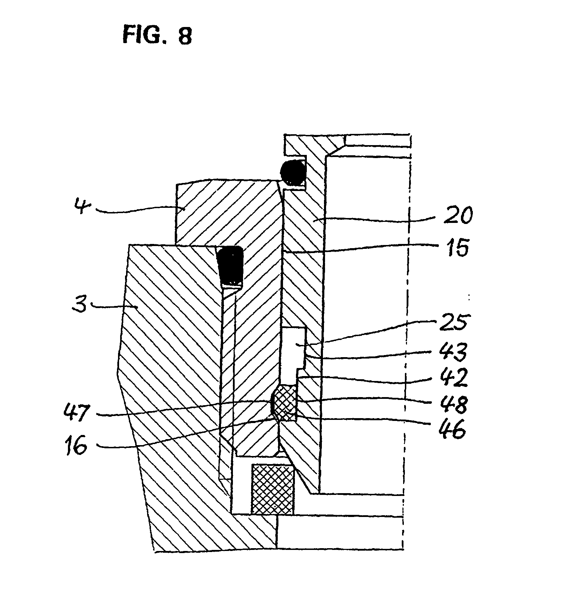

Das in Figur 8 gezeigte Ausführungsbeispiel ist eine Abwandlung des Ausführungsbeispiels gemäß Figur 7. Der hierbei als zweites Halteelement vorgesehene Ring 46 aus Kunststoff ist in Bezug auf seine radiale Mittelebene symmetrisch ausgebildet, um eine falsche Montage zu vermeiden. Die Mantelfläche 47 des Rings 46 weist dementsprechend zwei Zentrierfasen auf, von denen jeweils nur die vorn liegende beim Einstecken wirksam ist. Die Bohrungsfläche 48 des Rings 46 ist ebenso wie der Abschnitt 43 der Ausnehmung 25 zylindrisch ausgebildet. Um eine ausreichende Abstützung des Rings 46 in der Ausnehmung 16 in der Bohrung 15 des Einsatzteils 4 zu erreichen, ist die Ausnehmung 16 an die Form der Mantelfläche 47 angepaßt und mit zwei in ihrer Neigung den Zentrierfasen entsprechenden Kegelflächen versehen. In der in Figur 8 gezeigten Sicherungsstellung greift der Ring 46 in die Ausnehmung 16 ein und liegt mit seiner zylindrischen Bohrungsfläche 48 auf dem Abschnitt 42 der Mantelfläche der Ausnehmung 25 auf, so daß er nicht aus der Ausnehmung 16 herausgedrückt werden kann. Wird der Steckzapfen 20 zur Erreichung der Verriegelungsstellung tiefer in das Einsatzteil 4 hineingedrückt, so gelangt der Ring 46 zunächst in den hinteren Abschnitt 43 der Ausnehmung 25 und wird dann gemeinsam mit dem Steckzapfen 20 in Einsteckrichtung verschoben, wobei er mit seiner vorderen Zentrierfase an der Kegelfläche der Ausnehmung 16 entlanggleitet und radial zusammengedrückt wird. Ist die Verriegelungsstellung erreicht, so befindet sich der Ring 38 im inneren Endabschnitt der Bohrung 15 in einer der Position des Rings 33 in Figur 7c entsprechenden Position.

In Abweichung von den beschriebenen Ausführungsbeispielen kann das zweite Halteelement auch ein geschlitzter Ring aus elastisch verformbarem Material, z.B. ein Blechformteil, sein, der an mehreren Stellen seines Umfangs Finger, Zapfen oder dergleichen aufweist, die den Ring gegenüber dem Steckzapfen bzw. dem Einsatzteil zentrieren. Die Zapfen, Finger oder dergl. können radial nach innen oder radial nach außen gerichtet sein.

## Patentansprüche

1. Steckverbindung für Rohrleitungen mit zwei Verbindungsteilen, nämlich einem Innenteil (2) und einem Außenteil (1), die miteinander verbunden und voneinander getrennt werden können, wobei das Innenteil mit einem Steckzapfen (20) in eine Öffnung des Außenteils einsteckbar und dort über ein erstes in radialer Richtung verformbares Halteelement (11) verriegelbar ist, das in einer Ausnehmung (10) in der Öffnung des Außenteils angeordnet und beim Steckvorgang durch radiale elastische Verformung in diese Ausnehmung verdrängbar ist, wobei im Steckzapfen (20) eine Ausnehmung (25) vorgesehen ist, in die das erste Halteelement in der Verriegelungsstellung der Verbindungsteile durch elastisches Zurückverformen derart eingreift, daß der Steckzapfen gegen Herausziehen aus der Öffnung durch das erste Halteelement verriegelt ist, wobei das Außenteil aus zwei insbesondere durch eine Schraubverbindung lösbar miteinander verbundenen Teilen, einem den Steckzapfen in einer Bohrung aufnehmenden Einsatzteil (4) und einem Gehäuseteil (3) mit einer Bohrung zur Aufnahme des Einsatzteils, und die Ausnehmung im Außenteil aus einer zwischen dem Einsatzteil und dem Gehäuseteil gebildeten ringförmigen Kammer besteht, deren in Einsteckrichtung vordere Begrenzungswand von der Stirnfläche des Einsatzteils gebildet ist und wobei in der Bohrung des Einsatzteils eine Ausnehmung (16) zur Aufnahme eines zweiten radial elastisch verformbaren Halteelements (26) vorgesehen ist, das in einer Ausnehmung des Steckzapfens angeordnet ist und in einer vor der Verriegelungsstellung erreichbaren Sicherungsstellung in die Ausnehmung im Einsatzteil eingreift und dadurch den Steckzapfen gegen Herausziehen aus dem Einsatzteil sichert, **dadurch gekennzeichnet, daß** nach dem Lösen des Einsatzteils (4) vom Gehäuseteil (3) der Steckzapfen (20) mit dem zweiten Halteelement (26) in der Bohrung (15) des Einsatzteils (4) in Einsteckrichtung über die Verriegelungsstellung hinaus in eine Stellung verschiebbar ist, in der das zweite Halteelement (26) aus der Bohrung (15) des Einsatzteils (4) heraustritt und aus der Ausnehmung (25) im Steckzapfen (20) entnehmbar ist.

2. Steckverbindung nach Anspruch 1, **dadurch gekennzeichnet, daß** die Ausnehmung (25) im Steckzapfen (20) einen ersten in Einsteckrichtung vorderen Abschnitt (42) und einen zweiten in Einsteckrichung hinteren Abschnitt (43) aufweist, daß der erste Abschnitt (42) ein radiale Tiefe hat, die kleiner ist als die radiale Dicke des zweiten Halteleements (33, 46) und daß der zweite Abschnitt (43) so groß bemessen ist, daß er das zweite Haltelement (33, 46) vollständig aufnehmen kann.

3. Steckverbindung nach einem der Ansprüche 1 oder 2, **dadurch gekennzeichnet, daß** die in Einsteckrichtung hintere Begrenzungswand der Ausnehmung (16) im Einsatzteil (4) als Rampe (17) ausgebildet ist und das zweite Halteelement (26) durch die Bewegung des Steckzapfens (20) in Einsteckrichtung unter radialer Verformung längs der Rampe (17) in die Bohrung (15) und aus dieser heraus bewegbar ist.

4. Steckverbindung nach einem der Ansprüche 1 oder 2, **dadurch gekennzeichnet, daß** die Ausnehmung (16) in der Bohrung (15) des Einsatzteils (4) sich bis zur Stirnfläche (8) des Einsatzteils (4) erstreckt.

5. Steckverbindung nach einem der Ansprüche 1 bis 4, **dadurch gekennzeichnet, daß** das zweite Halteelement (26) ein geschlitzter, elastisch verformbarer kreisförmiger Ring (27, 30, 33) ist.

6. Steckverbindung nach Anspruch 5, **dadurch gekennzeichnet, daß** der Ring (27) von der Kreisform abweicht und Abschnitte (28, 29) aufweist, die an der Mantelfläche der Ausnehmung (25) des Steckzapfens (20) anliegen und dadurch den Ring (27) gegenüber dem Steckzapfen (20) zentrieren.

7. Steckverbindung nach Anspruch 6, **dadurch gekennzeichnet, daß** das zweite Halteelement (26) ein geschlitzter, kreisförmiger Federdrahtring (27) mit von der Kreisform abweichenden, radial nach innen gebogenen Umfangsabschnitten (28, 29) ist.

8. Steckverbindung nach Anspruch 5, **dadurch gekennzeichnet, daß** in der Ausnehmung (25) des Steckzapfens (20) in einer der in Steckrichtung hinteren Wand (31) benachbarten Nut ein Elastomerring (32) angeordnet ist, durch den der geschlitzte Ring (30) zentriert und in Anlage an der Wand (31) gehalten wird.

9. Steckverbindung nach Anspruch 5, **dadurch gekennzeichnet, daß** der Ring (33) einen im wesentlichen rechteckigen Querschnitt aufweist, wobei in Abweichung von der rechteckigen Querschnittsform ein in Einsteckrichtung vorderer Abschnitt seiner Mantelfläche (35) als Kegelfläche (39) ausgebildet ist.

10. Steckverbindung nach Anspruch 9, **dadurch gekennzeichnet, daß** der zweite in Einsteckrichtung hintere Abschnitt (43) der Ausnehmung (25) im Steckzapfen (20) eine an die hintere Begrenzungswand angrenzende Kegelfläche (44) und der Ring (33) auf einer Seite eine der Kegelfläche (44) entsprechende, dieser gegenüberliegende Ausnehmung (Fase 41) und auf der anderen Seite eine durch die Bohrungsfläche (34) und die Stirnfläche (36) gebildete Kante aufweist.

11. Steckverbindung nach einem der Ansprüche 9 oder 10, **dadurch gekennzeichnet, daß** der Außendurchmesser des rechteckigen Querschnitts des Rings (33) größer ist als der Durchmesser der Eintrittsöffnung der Bohrung (15) im Einsatzteil (4).

12. Steckverbindung nach Anspruch 9, **dadurch gekennzeichnet, daß** der Ring (46) zur radialen Mittelebene symmetrisch ausgebildet ist und daß die Mantelfläche (47) des Rings (46) zwei Zentrierfasen hat.

13. Steckverbindung nach Anspruch 10, **dadurch gekennzeichnet, daß** die Form der Begrenzungsflächen der Ausnehmung (16) im Einsatzteil (4) an die Form der Mantelfläche (47) des entspannten Rings (46) angepaßt ist.

14. Steckverbindung nach einem der Ansprüche 1 bis 4 oder 8, **dadurch gekennzeichnet, daß** das zweite Halteelement ein ungeschlitzter, in seiner Umfangslänge elastisch veränderbarer Ring, z.B. ein Wurmfederring ist.

15. Steckverbindung nach einem der Ansprüche 1 bis 4, **dadurch gekennzeichnet, daß** das zweite Halteelement ein geschlitzter Ring aus elastisch verformbarem Material ist, der an mehreren Stellen seines Umfangs Finger, Zapfen oder dergleichen aufweist, die den Ring gegenüber dem Steckzapfen zentrieren.

## Claims

1. Plug-in connection for pipes with two connecting parts, in particular an inner part (2) and an outer part (1), which can be connected to one another and separated from one another, wherein the inner part with a spigot (20) can be inserted into an orifice of the outer part where it can be locked via a first radially deformable holding element (11) which can be arranged in a recess (10) in the orifice of the outer part and urged into this recess by radial elastic deformation during the plugging-in process, wherein a recess (25) is provided in the spigot (20), in which the first holding element engages by elastic return in the locking position of the connecting parts in such a way that the spigot is locked against removal from the orifice by the first holding element, wherein the outer part consists of two parts releasably connected to one another, in particular by a screw connection, an insert part (4) receiving the spigot in a bore and a casing part (3) with a bore for receiving the insert part, and the recess in the outer part consists of an annular chamber formed between the insert part and the casing part, of which the limiting wall leading in the insertion direction is formed by the end face of the insert part and wherein, in the bore of the insert part, a recess (16) is provided to receive a second radially elastically deformable holding element (26) which is arranged in a recess of the spigot and engages in the recess in the insert part in a securing position which can be reached prior to the locking position and thus secures the spigot against removal from the insert part, **characterised in that**, after release of the insert part (4) from the casing part (3), the spigot (20) with the second holding element (26) can be displaced in the bore (15) of the insert part (4) in the insertion direction beyond the locking position into a position in which the second holding element (26) leaves the bore (15) of the insert part (4) and can be removed from the recess (25) in the spigot (20).

2. Plug-in connection according to claim 1, **characterised in that** the recess (25) in the spigot (20) comprises a first portion (42) leading in the insertion direction and a second portion (43) trailing in the insertion direction, **in that** the first portion (42) has a radial depth smaller than the radial thickness of the second holding element (33, 46) and **in that** the second portion (43) is of a size such that it can receive the second holding element (33, 46) completely.

3. Plug-in connection according to either of claims 1 or 2, **characterised in that** the limiting wall of the recess (16) trailing in the insertion direction is designed as a ramp (17) in the insert part (4) and the second holding element (26) can be moved into the bore (15) and out of the bore (15) by the movement of the spigot (20) in the insertion direction with radial deformation along the ramp (17).

4. Plug-in connection according to either of claims 1 or 2, **characterised in that** the recess (16) in the bore (15) of the insert part (4) extends up to the end face (8) of the insert part (4).

5. Plug-in connection according to any one of claims 1 to 4, **characterised in that** the second holding element (26) is a slit, elastically deformable circular ring (27, 30, 33).

6. Plug-in connection according to claim 5, **characterised in that** the ring (27) differs from the circular shape and has portions (28, 29) which rest on the surface of the recess (25) of the spigot (20) and thus locate the ring (27) relative to the spigot (20).

7. Plug-in connection according to claim 6, **characterised in that** the second holding element (26) is a slit circular spring wire ring (27) with peripheral portions (28, 29) bent radially inward and differing from the circular shape.

8. Plug-in connection according to claim 5, **characterised in that**, arranged in the recess (25) of the spigot (20) in a groove adjacent to the wall (31) trailing in the insertion direction, there is an elastomeric ring (32), by which the slit ring (30) is located and held in contact with the wall (31).

9. Plug-in connection according to claim 5, **characterised in that** the ring (33) has a substantially rectangular cross-section, a portion leading in the insertion direction of its surface (35) being formed as a conical face (39) differing from the rectangular cross-sectional shape.

10. Plug-in connection according to claim 9, **characterised in that** the second portion (43) trailing in the insertion direction, of the recess (25) in the spigot 20 comprises a conical face (44) adjacent to the trailing limiting wall and the ring (33) on one side comprises a recess (chamfer 41) corresponding to the conical face (44) and opposing it and on the other side comprises an edge formed by the bore face (34) and the end face (36).

11. Plug-in connection according to either of claims 9 or 10, **characterised in that** the external diameter of the rectangular cross-section of the ring (33) is greater than the diameter of the inlet orifice of the bore (15) in the insert part (4).

12. Plug-in connection according to claim 9, **characterised in that** the ring (46) is formed symmetrically to the radial centre plane and **in that** the surface (47) of the ring (46) has two locating chamfers.

13. Plug-in connection according to claim 10, **characterised in that** the shape of the limiting faces of the recess (16) in the insert part (4) is adapted to the shape of the surface (47) of the unstressed ring (46).

14. Plug-in connection according to any one of claims 1 to 4 or 8, **characterised in that** the second holding element is an unslit ring which can be elastically changed in its perimeter, for example a worm spring washer.

15. Plug-in connection according to any one of claims 1 to 4, **characterised in that** the second holding element is a slit ring made of elastically deformable material comprising, at a plurality of points round its periphery, fingers, pins or the like locate centre the ring relative to the spigot.

## Revendications

1. Raccord emboîtable pour tuyaux avec deux éléments de raccord, à savoir un élément intérieur (2) et un élément extérieur (1), qui peuvent être connectés ensemble et séparés l'un de l'autre, l'élément intérieur pouvant être introduit avec un tenon de connexion (20) dans une ouverture de l'élément extérieur et pouvant être verrouillé dans cette position à l'aide d'un premier élément de retenue (11) déformable en direction radiale et disposé dans un évidement (10) situé dans l'ouverture de l'élément extérieur et qui peut être repoussé dans cet évidement lors de la procédure d'introduction par déformation élastique radiale, un évidement (25) étant prévu dans le tenon de raccord (20) dans lequel, en position de verrouillage de l'élément de raccord, le premier élément de retenu s'engage par retour de déformation élastique de telle sorte que le premier élément de retenue empêche le tenon de connexion de ressortir de l'ouverture, l'élément extérieur étant constitué de deux parties, un insert (4) recevant le tenon de connexion dans un trou et un boîtier (3) avec un trou pour recevoir l'insert, lesdites deux parties sont reliées entre elles de façon réversible en particulier par un raccord vissé, et l'évidement dans l'élément extérieur étant constitué d'une chambre annulaire formée entre l'insert et le boîtier et dont la paroi limitrophe avant, par rapport au sens d'introduction, est formée par la surface frontale de l'insert, et un évidement (16) étant prévu dans le trou de l'insert pour recevoir un deuxième élément de retenue (26) pouvant se déformer élastiquement en direction radiale, ledit élément de retenue est disposé dans un évidement du tenon de connexion et s'engage dans l'évidement situé dans l'insert en une position de sécurité accessible avant la position de verrouillage et ainsi empêche le tenon de connexion de sortir de l'insert, **caractérisé en ce qu'**après la libération de l'insert (4) du boîtier (3) le tenon de connexion (20) peut être poussé avec le deuxième élément de retenue (26) dans le trou (15) de l'insert (4) dans le sens d'introduction au-delà de la position de verrouillage dans une position dans laquelle le deuxième élément de retenue (26) sort du trou (15) de l'insert (4) et peut être retiré de l'évidement (25) situé dans le tenon de connexion (20).

2. Raccord emboîtable selon la revendication 1, **caractérisé en ce que** l'évidement (25) situé dans le tenon de connexion (20) est muni d'une première section (42) avant, par rapport au sens d'introduction, et d'une deuxième section (43) arrière, par rapport au sens d'introduction, **en ce que** la première section (42) a une profondeur radiale plus petite que l'épaisseur radiale du deuxième élément de retenue (33, 46), et **en ce que** la deuxième section (43) est dimensionnée suffisamment grande pour qu'elle puisse recevoir entièrement le deuxième élément de retenue (33, 46).

3. Raccord emboîtable selon l'une des revendications 1 ou 2, **caractérisé en ce que** la paroi limitrophe arrière, par rapport au sens d'introduction, de l'évidement (16) dans l'insert (4) a la forme d'une rampe (17) et le deuxième élément de retenue (26) peut être déplacé en se déformant radialement dans et hors du trou (15) par le mouvement du tenon de connexion (20) en direction d'introduction.

4. Raccord emboîtable selon l'une revendications 1 ou 2, **caractérisé en ce que** l'évidement (16) dans le trou (15) de l'insert (4) s'étend jusqu'à la surface frontale (8) de l'insert (4).

5. Raccord emboîtable selon l'une des revendications 1 à 4, **caractérisé en ce que** le deuxième élément de retenue (26) est une bague fendue ronde et élastiquement déformable (27, 30, 33).

6. Raccord emboîtable selon la revendication 5, **caractérisé en ce que** la bague (27) s'écarte de la forme circulaire et présente des sections (28, 29) qui sont adjacentes à l'enveloppe de l'évidement (25) du tenon de connexion (20) et centrent ainsi la bague (27) par rapport au tenon de connexion (20).

7. Raccord emboîtable selon la revendication 6, **caractérisé en ce que** le deuxième élément de retenue (26) est une bague (27) fendue ronde de fil flexible avec des sections périphériques (28, 29) s'écartant de la forme circulaire, cintrées radialement vers l'intérieur.

8. Raccord emboîtable selon la revendication 5, **caractérisé en ce qu'**un anneau d'élastomère (32) est disposé dans l'évidement (25) du tenon de connexion (20) dans une rainure voisine de la paroi (31) arrière, par rapport au sens d'introduction, la bague fendue (30) étant centrée avec cet anneau d'élastomère et maintenue en appui contre la paroi (31).

9. Raccord emboîtable selon la revendication 5, **caractérisé en ce que** la bague (33) présente une section transversale essentiellement rectangulaire, une section avant, par rapport au sens d'introduction, de son enveloppe (35) ayant la forme d'une surface conique (39) divergeant de la forme de coupe transversale rectangulaire.

10. Raccord emboîtable selon la revendication 9, **caractérisé en ce que** la deuxième section (43) arrière, par rapport au sens d'introduction, de l'évidement (25) dans le tenon de connexion (20) est munie d'une surface conique (44) contiguë à la paroi limitrophe arrière, et la bague (33) est munie sur un côté d'un évidement (biseau 41) correspondant à la surface conique et contiguë à cette dernière, et sur l'autre côté d'une arête formée par la surface du trou (34) et la surface frontale (36).

11. Raccord emboîtable selon l'une des revendications 9 ou 10, **caractérisé en ce que** le diamètre extérieur de la section transversale rectangulaire de la bague (33) est plus grand que le diamètre de l'ouverture d'entrée du trou (15) dans l'insert (4).

12. Raccord emboîtable selon la revendication 9, **caractérisé en ce que** la bague (46) est symétrique par rapport au plan moyen radial et **en ce que** l'enveloppe (47) de la bague (46) est munie de deux biseaux de centrage.

13. Raccord emboîtable selon la revendication 10, **caractérisé en ce que** la forme des surfaces limitrophe de l'évidement (16) dans l'insert (4) est adaptée à la forme de l'enveloppe (47) de la bague (46) détendue.

14. Raccord emboîtable selon l'une des revendications 1 à 4 ou 8, **caractérisé en ce que** le deuxième élément de retenue est une bague non fendue dont la longueur périphérique peut être modifiée élastiquement, par exemple un ressort élastique en forme de spirale.

15. Raccord emboîtable selon l'une des revendications 1 à 4, **caractérisé en ce que** le deuxième élément de retenue est une bague fendue réalisée dans un matériau élastiquement déformable qui est muni en plusieurs points de sa périphérie de doigts, de tenons ou de dispositifs semblables qui centrent la bague par rapport au tenon de connexion.
